(19) Europäisches Patentamt / European Patent Office / Office européen des brevets

(11) **EP 3 300 148 B1**

(12) **EUROPEAN PATENT SPECIFICATION**

(45) Date of publication and mention
of the grant of the patent:
**24.06.2020 Bulletin 2020/26**

(21) Application number: **16796469.1**

(22) Date of filing: **16.05.2016**

(51) Int Cl.:
*H01M 4/62* (2006.01)      *H01M 4/134* (2010.01)
*H01M 4/48* (2010.01)      *H01M 4/1395* (2010.01)
*H01M 10/0525* (2010.01)

(86) International application number:
**PCT/JP2016/064466**

(87) International publication number:
**WO 2016/186076 (24.11.2016 Gazette 2016/47)**

(54) **NEGATIVE ELECTRODE FOR NON-AQUEOUS ELECTROLYTE SECONDARY BATTERIES**

NEGATIVELEKTRODE FÜR SEKUNDÄRBATTERIE MIT WASSERFREIEM ELEKTROLYT

ÉLECTRODE NÉGATIVE POUR BATTERIES SECONDAIRES À ÉLECTROLYTE NON AQUEUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.05.2015 JP 2015103628**

(43) Date of publication of application:
**28.03.2018 Bulletin 2018/13**

(73) Proprietor: **Toppan Printing Co., Ltd.
Tokyo 110-0016 (JP)**

(72) Inventors:
• **ARAKI, Mayu
Tokyo 110-0016 (JP)**

• **KURIHARA, Hitoshi
Tokyo 110-0016 (JP)**

(74) Representative: **Hoffmann Eitle
Patent- und Rechtsanwälte PartmbB
Arabellastraße 30
81925 München (DE)**

(56) References cited:
EP-A1- 3 098 881        WO-A1-2014/015335
JP-A- 2013 197 055        JP-A- 2014 203 771
JP-A- 2014 510 362        US-A1- 2007 065 720
US-A1- 2014 087 250        US-B2- 8 652 688

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

[Technical Field]

The present invention relates to an anode for a nonaqueous electrolyte secondary cell, and more specifically relates to an anode for a nonaqueous electrolyte secondary cell that can improve the cycle characteristics.

[Background Art]

Recently, as secondary cells capable of repeated charging and discharging, Li-ion secondary cells have attracted attention. Such a Li-ion secondary cell is expected to reduce the amount of petroleum to be used or reduce greenhouse effect gases, and to achieve further diversifications or efficiencies of energy infrastructures. Particularly, such a Li-ion secondary cell is expected to be applied to electric cars, hybrid electric cars, and fuel cell cars. Electric cars need to increase cruising distance, and accordingly secondary cells need to achieve higher energy density in the future.

Discussing the currently used anodes, graphite electrodes are generally used as anodes. The theoretical capacity of graphite is 372 mAh/g (active material). In contrast, recently, Si or Sn is drawing attention as an active material that shows a capacity exceeding graphite. The theoretical capacity of Si is 4200 mAh/g (active material), and the theoretical capacity of Sn is 990 mAh/g (active material). Since Si has a capacity that is approximately 11 times the capacity of graphite, a volume change with occlusion and release of Li is also great. The volume increases by a factor of approximately 4 due to occlusion of Li.

Compared to graphite, an electrode using an active material having a large capacity experiences a large volume change during charging and discharging. Therefore, there are risks that the conductive path of the electrode may be disconnected, or the active material may be separated from the electrode due to pulverization, or there may be peeling between a collector and an active material layer. These could be factors in deterioration in the cycle characteristics of batteries.

A factor deteriorating the cycle characteristics is that Li is consumed due to the formation of an SEI (solid electrolyte interphase). Specifically, since a Si-based active material causing a large volume change due to charging and discharging may repeat breakage and formation of the SEI, the consumption of Li due to the formation of the SEI cannot be ignored.

PTL 1 describes an invention for preventing decrease of capacity by modifying the surface of the metallic active material with a material containing a repeating unit of an alkylene oxide. Expansion of the active material can be partially prevented by elasticity of the repeating unit. However, when expansion and contraction of the active material are large, a volume change cannot be reduced, whereby sufficient cycle characteristics cannot be obtained.

PTL 2 describes adjusting the amount of a carboxyl group of polyacrylic acid, as a binder, by crosslinkage of alkali earth metal thereto and controlling the adhesiveness to an anode collector to thereby relieve the load applied to the collector due to expansion and contraction of the active material layer and reinforce the mechanical strength of the active material layer.

According to claim 1, PTL 3 relates to an anode for a Li-ion battery comprising a layer of specific nanowires as the anode active material on a conductive substrate. In Example 7 of the document, a nanowire slurry is prepared by combining nanowires with sodium alginate (NaAlg) and polyacrylic acid (PAA) binders and conductive carbon. The slurry is dried and subsequently heated to crosslink the NaAlg and PAA binder.

PTL 4 relates to a silicon-based anode comprising an alginate-containing binder. As a specific embodiment, an electrode composed of a mixed binder of polyacrylic acid (PAA) and alginate with Si-containing particles is described, wherein the molecular weight of the PAA is preferably 50,000 to 1,000,000.

[Citation List]

[Patent Literature]

[PTL 1] JP 2007-157709 A
[PTL 2] WO2014/200003 A
[PTL 3] WO2014/015335 A1
[PTL 4] US 8 652 688 B2

[Summary of the Invention]

[Technical Problem]

As described above, research for preventing degradation of the cycle characteristics due to a volume change caused by occlusion and release of lithium ion has been conducted, however, the advantageous effect is insufficient, and thus further improvement in the cycle characteristics is desired.

The present invention has been made in consideration of the aforementioned points, and an object thereof is to provide an anode for a nonaqueous electrolyte secondary cell that can improve the cycle characteristics.

[Solution to Problem]

In order to solve the problem, an aspect of the present invention is an anode for a nonaqueous electrolyte secondary cell as defined in claim 1. Preferred embodiments of the anode for a nonaqueous electrolyte secondary cell are the subject of the dependent claims.

[Advantageous Effects of Invention]

According to the aspect of the present invention, the active material layer of the electrode includes the binder that uses a combination of the crosslinked aqueous polysaccharide polymer having a carboxyl group, which is a sodium alginate, and the aqueous polymer having a carboxyl group which has a number average molecular weight of 300,000 or less, and this combination can improve the cycle characteristics.

[Description of Embodiments]

Next, an embodiment of the present invention will be described.

A binder in an active material layer of an anode for a nonaqueous electrolyte secondary cell of the present embodiment contains a crosslinked aqueous polysaccharide polymer having a carboxyl group, which is a sodium alginate, and an aqueous polymer having a carboxyl group with a number average molecular weight of 300,000 or less. Preferably, the aqueous polymer having a carboxyl group is an acidic polymer.

The binder having a polysaccharide contributes to improving the mechanical strength of the mixture as an entirety and to preventing the occurrence of cracks in a mixture layer. Moreover, after application of crosslinking treatment to the aqueous polysaccharide polymer, at least a part of the aqueous polymer is crosslinked, which enhances creep resistance of the aqueous polymer, leading to prevention of strain due to stress relaxation, that is, relief of the internal stress caused by volume expansion at the time of charging. Accordingly, the volume contraction at the time of discharging will enable the mixture layer to restore its original volume. As a result, disconnection of the conductive path can be prevented, and thus the cell using the anode for a nonaqueous electrolyte secondary cell of the present embodiment can improve the cycle characteristics.

The aqueous polymer having a carboxyl group is small in molecular weight. The aqueous polymer, when having a carboxyl group with a number average molecular weight of 300,000 or less, is adhered to the surface of the active material and prevents contact of an electrolytic solution, and at the same time, bonds with the binder having a polysaccharide, thereby providing a film that is stable even during a volume change of the active material. As a result, continuous formation of the SEI during repeated charging and discharging can be prevented. The bonding with the binder having a polysaccharide is conducted through an acid anhydride process, and since the aqueous polymer having a carboxyl group with a low molecular weight can be well mixed with the binder having a polysaccharide and can establish even covalent bonding with the binder having a polysaccharide, resistance to volume variation of the mixture layer can be improved.

Also from this result, the cell using the anode for a nonaqueous electrolyte secondary cell of the present embodiment can further improve the cycle characteristics.

Preferably, when the aqueous polymer having a carboxyl group has a number average molecular weight of 5,000 or more, the aforementioned advantageous effect can be sufficiently achieved. On the other hand, when the number average molecular weight is less than 1,000, the aqueous polymer will be dissolved in the electrolytic solution, and thus a number average molecular weight of 1,000 or more is preferable.

Furthermore, since the polymer used for the binder contains a large number of carboxyl groups, the Li-ion conductivity is improved and at the same time, swelling of the electrolytic solution can be reduced. Due to this, reductive decomposition of the electrolytic solution is prevented.

The aqueous polysaccharide polymer having a carboxyl group serving as a binder is a sodium alginate. Additionally, the aqueous polymer having a carboxyl group with a number average molecular weight of 300,000 or less serving as the binder, is preferably a polyacrylic acid.

A crosslinking agent may be one which is capable of forming crosslinkages by the reaction with a carboxylic acid. An electrode slurry is formed by adding the crosslinking agent dropwise to a polymer aqueous solution, followed by addition and mixing of a conductive assistant or an active material. The crosslinking agent that is used has a reaction rate that is dependent on pH of a polymer aqueous solution. Accordingly, when the crosslinking agent is added dropwise to the acidic polymer aqueous solution, a uniform crosslinkage cannot be formed. Therefore, by adding the crosslinking agent dropwise to a completely neutralized polymer aqueous solution of a polysaccharide, the reaction is permitted to progress slowly and a uniform crosslinkage is conducted. Then, by adding an acidic aqueous polymer having a carboxyl group, a polymer aqueous solution where the reaction has been totally completed can be obtained.

The addition of the crosslinking agent is preferably 0.1 wt% or more and 3.0 wt% or less relative to the polymer of a polysaccharide. If the crosslinking agent is less than 0.1 wt%, the crosslinking is insufficient to obtain an advantageous effects. If the crosslinking agent is more than 3.0 wt%, the conductive assistant and the active material cannot be sufficiently dispersed which is not desirable.

The crosslinking agent is not particularly limited as long as it is an aqueous crosslinking agent that can react with a carboxylic acid, however a carbodiimide-based compound or an aziridine-based compound is preferably used that can be reacted within several minutes at room temperature. Specifically, the aziridine-based compound is preferred.

An anode active material used as the anode of the present embodiment is not particularly limited, as long as it can reversibly occlude and release Li, and thus known materials can be used as well. However, materials that can be alloyed with Li are preferably used. Specifically, any material larger in capacity than graphite can prominently achieve an advantageous effects of the present embodiment.

One or more selected from the group consisting of Si, Ge, Sn, Pb, Al, Ag, Zn, Hg and Au can be used for alloying with Li. Preferably, $SiO_x$, and more preferably, $SiO_x$ with x being 1.5 or less. If x is larger than 1.5, a sufficient amount of occlusion and release of Li is not necessarily ensured. Not only the aforementioned active material, but also a graphite material may be added as an active material.

Materials that can be used for the conductive assistant include carbon black, natural graphite, artificial graphite, and further, a metal oxide such as titanium oxide or ruthenium oxide, and metal fibers. Among these materials, carbon black is preferably used because of its structure, and in particular, furnace black, ketjen black, or acetylene black (AB), which is a kind of carbon black, is more preferably used.

A mixture of carbon black and other conductive agents such as vapor grown carbon fiber (VGCF) may also be preferably used.

Examples of solvents of the electrolytic solution used in the anode for a nonaqueous electrolyte secondary cell include low-viscosity acyclic carbonates such as dimethyl carbonate and diethyl carbonate, cyclic carbonates of high dielectric constant such as ethylene carbonate, propylene carbonate and butylene carbonate, γ-butyrolactone, 1,2-dimethoxyethane, tetrahydrofuran, 2-methyltetrahydrofuran, 1,3-dioxolane, methyl acetate, methyl propionate, vinylene carbonate, dimethylformamide, sulfolane, and mixed solvents thereof.

Examples of the electrolyte contained in the electrolytic solution include, but are not particularly limited to, $LiClO_4$, $LiBF_4$, $LiAsF_6$, $LiPF_6$, $LiCF_3SO_3$, $LiN(CF_3SO_2)_2$, LiI, $LiAlCl_4$, and mixtures thereof. Preferably, the electrolyte contains either $LiBF_4$ or $LiPF_6$, or is obtained by mixing both $LiBF_4$ and $LiPF_6$, or by mixing $LiBF_4$, $LiPF_6$ and other lithium salts..

(Advantageous effects of the present embodiment)

(1) In the anode of the present embodiment, an active material layer of an electrode includes a binder that contains an aqueous polysaccharide polymer having a carboxyl group, which is a sodium alginate, and an aqueous polymer having a carboxyl group with a number average molecular weight of 300,000 or less, and crosslinking treatment is applied to the aqueous polysaccharide polymer having a carboxyl group.

According to this configuration, the active material layer of the electrode includes the binder that uses a combination of the crosslinked aqueous polysaccharide polymer having a carboxyl group, which is a sodium alginate, and the aqueous polymer having a carboxyl group which has a number average molecular weight of 30 0,000 or less, and this combination can improve the cycle characteristics.

In other words, by modifying the surface of the active material with a polymer containing a carboxyl group, followed by bonding to a crosslinking binder, a stable SEI layer is formed and thus a mixture layer with high mechanical strength is provided, thereby preventing detachment of the active material due to volume change caused by charging and discharging, and thus providing an anode for a secondary cell with good cycle characteristics.

(2) In the anode of the present embodiment, the aqueous polysaccharide polymer having a carboxyl group, which is a sodium alginate, is completely neutralized. Also, the aqueous polymer having a carboxyl group is an acidic polymer.

As the crosslinking agent to be used has a reaction rate that is dependent on pH of the polymer aqueous solution, by adding the crosslinking agent dropwise to the completely neutralized polymer aqueous solution of a polysaccharide, the reaction is permitted to progress slowly and a uniform crosslinkage can be achieved. Moreover, by mixing the aqueous polymer having a carboxyl group which is an acidic polymer, the reaction can be completed.

(3) In the anode of the present embodiment, the aqueous polysaccharide polymer having a carboxyl group is sodium alginate.

According to this configuration, by binding with a crosslinked alginate can prevent the active material from being separated from the active material layer due to volume change caused by charging and discharging, or prevent the active material layer from peeling from the collector. As a result, an electrode for a secondary cell with good cycle characteristics can be provided.

(4) In the anode of the present embodiment, the aqueous polymer having a carboxyl group is a polyacrylic acid.

According to this configuration, by modifying the surface of the active material with a polyacrylic acid, a stable SEI can be formed on the surface of the active material.

(5) In the anode of the present embodiment, the active material in the active material layer of the electrode contains $SiO_x$.

According to this configuration, the required amount of occlusion and release of Li can be secured.

[Examples]

The present invention is further described in detail by way of examples; however the present invention is not limited to the examples.

(Example 1) (Reference example outside the scope of the claimed invention)

An anode slurry was prepared through the following procedure.

0.56 g of sodium alginate (manufactured by Kikkoman Biochemifa Company) was added to 36.00 g of water and stirred with a dispersion device. 0.01 g of an aziridine compound (PZ-33 manufactured by NIPPON SHOKUBAI CO., LTD.) was added to the polymer aqueous solution and stirred for 20 minutes, and further stirred after adding 0.14 g of polyacrylic acid (manufactured by NIPPON SHOKUBAI CO., LTD.). Further, 2.35 g of SiO (manufactured by OSAKA Titanium Technologies Co., Ltd) of D50 6.6 $\mu$m, and 0.47 g of AB and 0.47 g of VGCF were added to the resultant material and stirred. The mixture was fully dispersed with a Filmix (manufactured by PRIMIX Corporation) to thereby obtain an anode slurry.

The anode slurry thus obtained was applied to a collector. A copper foil having a thickness of 12 $\mu$m was used as the collector. The slurry was applied to the collector with a doctor blade so as to have a coating weight of 1.2 mg/cm$^2$, followed by drying at 80°C for 30 minutes. This was followed by pressing to attain a density of 1.0 g/cm$^3$, and further followed by drying at 105°C for 5 hours under reduced pressure. In this way, an anode was obtained.

A cathode slurry was prepared as follows. 24 g of acetylene black (HS-100 manufactured by Denka Company Limited) and 41 g of NMP were added to 120 g of NMP solution (#7208 manufactured by KUREHA CORPORATION) of PVdF, and stirred for 10 minutes using a twin kneader. Subsequently, 144 g of NCM (NIHON KAGAKU SANGYO CO., LTD.) and 337 g of LMO (Type-F of MITSUI MINING & SMELTING CO., LTD.) were added to the resultant material and stirred for 10 minutes. After confirming that a thick ink paste was formed, another 20-minute kneading was conducted. After that, NMP was added for dilution so that the solid content concentration became 60%.

The cathode slurry thus obtained was applied to a collector. An A1 foil having a thickness of 15 $\mu$m was used as the collector. The cathode slurry was applied to the collector with a doctor blade so as to have a coating weight of 18.8 mg/cm$^2$, followed by drying at 120°C for 30 minutes. This was further followed by pressing to attain a density of 2.5 g/cm$^3$, thereby obtaining a cathode.

(Example 2) (Reference example outside the scope of the claimed invention)

An anode slurry was prepared as follows. 0.56 g of sodium alginate (manufactured by Kikkoman Biochemifa Company) was added to 36.00 g of water and stirred with a dispersion device. 0.0013 g of a carbodiimide compound (manufactured by Nisshinbo Holdings Inc.) was added to the polymer aqueous solution and stirred for 20 minutes, and further stirred after adding 0.14 g of polyacrylic acid (manufactured by NIPPON SHOKUBAI CO., LTD.). Further, 2.35 g of SiO (manufactured by OSAKA Titanium Technologies Co., Ltd) of D50 6.6 $\mu$m, and 0.47 g of AB and 0.47 g of VGCF were added to the resultant material and stirred. The mixture was fully dispersed with a Filmix (manufactured by PRIMIX Corporation), thereby obtaining an anode slurry. A cathode slurry and an electrode were prepared using the same method as Example 1.

(Example 3)

An anode slurry was prepared as follows. 0.56 g of sodium alginate (manufactured by Kikkoman Biochemifa Company) was added to 36.00 g of water and stirred with a dispersion device. 0.01 g of an aziridine compound (PZ-33 manufactured by NIPPON SHOKUBAI CO., LTD.) was added to the polymer aqueous solution and stirred for 20 minutes, and further stirred after adding 0.14 g of polyacrylic acid (a number average molecular weight of 5,000). Further, 2.35 g of SiO (manufactured by OSAKA Titanium Technologies Co., Ltd) of D50 6.6 $\mu$m, and 0.47 g of AB and 0.47 g of VGCF were added to the resultant material and stirred. The mixture was fully dispersed with a Filmix (manufactured by PRIMIX Corporation), thereby obtaining an anode slurry. A cathode slurry and an electrode were prepared using the same method as Example 1.

(Example 4)

An anode slurry was prepared as follows. 0.56 g of sodium alginate (manufactured by Kikkoman Biochemifa Company) was added to 36.00 g of water and stirred with a dispersion device. 0.01 g of an aziridine compound (PZ-33 manufactured by NIPPON SHOKUBAI CO., LTD.) was added to the polymer aqueous solution and stirred for 20 minutes, and further stirred after adding 0.14 g of polyacrylic acid (a number average molecular weight of 250,000). Further, 2.35 g of SiO (manufactured by OSAKA Titanium Technologies Co., Ltd) of D50 6.6 $\mu$m, and 0.47 g of AB and 0.47 g of VGCF were added to the resultant material and stirred. The mixture was fully dispersed with a Filmix (manufactured by PRIMIX Corporation), thereby obtaining an anode slurry. A cathode slurry and an electrode were prepared using the same method as Example 1.

(Example 5) (Reference example outside the scope of the claimed invention)

An anode slurry was prepared as follows. 0.56 g of sodium alginate (manufactured by Kikkoman Biochemifa Company) was added to 36.00 g of water and stirred with a dispersion device. 0.01 g of an aziridine compound (PZ-33 manufactured by NIPPON SHOKUBAI CO., LTD.) was added to the polymer aqueous solution and stirred for 20 minutes, and further stirred after adding 0.14 g of an acrylic acid-maleic acid copolymer (manufactured by Sigma-Aldrich Co. LLC.). Further, 2.35 g of SiO (manufactured by OSAKA Titanium Technologies Co., Ltd) of D50 6.6 $\mu$m, and 0.47 g of AB and 0.47 g of VGCF were added and stirred. The mixture was fully dispersed with a Filmix (manufactured by PRIMIX Corporation), thereby obtaining an anode slurry. A cathode slurry and an electrode were prepared using the same method as Example 1.

(Example 6) (Reference Example outside the scope of the claimed invention)

An anode slurry was prepared as follows. 0.56 g of carboxymethyl cellulose was added to 36.00 g of water and stirred with a dispersion device. 0.0007 g of a carbodiimide compound (manufactured by Nisshinbo Holdings Inc.) was added to the polymer aqueous solution and stirred for 20 minutes, and further stirred after adding 0.14 g of polyacrylic acid (manufactured by NIPPON SHOKUBAI CO., LTD.). Further, 2.35 g of SiO (manufactured by OSAKA Titanium Technologies Co., Ltd) of D50 6.6 $\mu$m, and 0.47 g of AB, 0.47 g of VGCF were added and stirred. The mixture was fully dispersed with a Filmix (manufactured by PRIMIX Corporation) thereby obtaining an anode slurry. A cathode slurry and an electrode were prepared using the same method as Example 1.

(Comparative Example 1)

An anode slurry was prepared as follows. 0.56 g of sodium alginate (manufactured by Kikkoman Biochemifa Company) was added to 36.00 g of water and stirred with a dispersion device, and after that, further stirred after adding 0.14 g of polyacrylic acid (manufactured by NIPPON SHOKUBAI CO., LTD.) to the polymer aqueous solution. Further, 2.35 g of SiO (manufactured by OSAKA Titanium Technologies Co., Ltd) of D50 6.6 $\mu$m, and 0.47 g of AB and 0.47 g of VGCF were added and stirred. The mixture was fully dispersed with a Filmix (manufactured by PRIMIX Corporation), thereby obtaining an anode slurry. A cathode slurry and an electrode were prepared using the same method as Example 1.

(Preparation of Cell and Evaluation)

Coin cells were prepared using the obtained respective anodes and cathodes. Then, charging and discharging were evaluated for Example 1 and Comparative Example 1. Charging and discharging were repeated 100 times in a voltage range of 3 to 4.25 V at 366 mA/g charge and 1829 mA/g discharge to carry out cycle evaluation. The cycle evaluation was conducted based on retention ratio after the 100th cycle. The retention ratio was calculated using the

following formula.

$$(\text{Discharge capacity at the } 100^{\text{th}} \text{ cycle}) / (\text{Discharge capacity at the first cycle}) \times 100$$

The coin cells used were of 2032 type.

Each anode was punched into a circular disc having a diameter of 15 mm, and each cathode was punched into a circular disc having a diameter of 13.5 mm, to carry out evaluation. Each coin cell was basically configured by the anode, the cathode, and a separator (Hipore ND525 manufactured by Asahi Kasei Corporation.). 1M LiPF$_6$-dissolved ethylene carbonate (EC)/diethyl carbonate (DEC) 3:7 (v/v) mixed solution containing 5wt% fluoroethylene carbonate (FEC) was used as an electrolyte.

The evaluation results are shown in Table 1.

[Table 1]

|  | Retention ratio after the 100$^{\text{th}}$ cycle |
|---|---|
| Example 1* | 99% |
| Example 2* | 98% |
| Example 3 | 98% |
| Example 4 | 99% |
| Example 5* | 99% |
| Example 6* | 95% |
| Comparative Example 1 | 93% |
| * For reference and outside the scope of the claimed invention. | |

As will be appreciated from Table 1, the cycle characteristics of Examples 1 and 2 were better than those of Comparative Example 1. From this result, it was confirmed that by modifying the surface of the active material of the present invention with the polymer containing a carboxyl group, followed by bonding to a crosslinking binder, the cycle characteristics were effectively improved.

As will be appreciated from Examples 3 and 4, a desirable molecular weight of a polymer covering the surface of an active material was confirmed to be a number average molecular weight of 300,000 or less. In Example 5, an acrylic acid-maleic acid copolymer was used as an example of a polymer containing a carboxyl group. In (Reference) Example 6, an ammonium salt of a carboxymethyl cellulose was used as a polymer having a polysaccharide. As will be appreciated from Table 1, the cycle characteristics were good in Examples 3 to 6 as well.

Although the above description has been made with reference to a limited number of embodiments, the scope of the invention is not limited thereto, and modifications of the above embodiments, on the basis of the above disclosure are obvious to a person having ordinary skill in the art. That is, the present invention should not be construed as being limited to the aforementioned embodiments. Design modifications or the like can be made to the above embodiments, on the basis of the knowledge of a skilled person in the art, and the modes to which such modifications or the like are added are also encompassed within the scope of the present invention.

**Claims**

1. An anode for a nonaqueous electrolyte secondary cell wherein
   an active material layer of an electrode includes a binder that contains an aqueous polysaccharide polymer having a carboxyl group, which is a sodium alginate, and an aqueous polymer having a carboxyl group ; and
   crosslinking treatment is applied to the aqueous polysaccharide polymer having a carboxyl group, which is a sodium alginate,
   **characterized in that**
   the aqueous polymer having a carboxyl group has a number average molecular weight of 300,000 or less.

2. The anode for a nonaqueous electrolyte secondary cell according to claim 1, **characterized in that**:

the aqueous polysaccharide polymer having a carboxyl group is completely neutralized, and
the aqueous polymer having a carboxyl group is an acidic polymer.

3. The anode for a nonaqueous electrolyte secondary cell according to claim 1 or 2, **characterized in that** the aqueous polymer having a carboxyl group is a polyacrylic acid.

4. The anode for a nonaqueous electrolyte secondary cell according to any one of claims 1 to 3, **characterized in that** the active material in the active material layer of the electrode contains $SiO_x$, wherein x is 1.5 or less.

**Patentansprüche**

1. Anode für eine Sekundärzelle mit nichtwässrigem Elektrolyten, wobei
eine Aktivmaterialschicht einer Elektrode ein Bindemittel enthält, das ein wässriges Polysaccharidpolymer mit einer Carboxylgruppe, bei dem es sich um ein Natriumalginat handelt, und ein wässriges Polymer mit einer Carboxylgruppe enthält; und
das wässrige Polysaccharidpolymer mit einer Carboxylgruppe, bei dem es sich um ein Natriumalginat handelt, einer Vernetzungsbehandlung unterzogen ist, **dadurch gekennzeichnet, dass**
das wässrige Polymer mit einer Carboxylgruppe ein zahlengemitteltes Molekulargewicht von 300.000 oder weniger aufweist.

2. Anode für eine Sekundärzelle mit nichtwässrigem Elektrolyten gemäß Anspruch 1, **dadurch gekennzeichnet, dass**:

das wässrige Polysaccharidpolymer mit einer Carboxylgruppe vollständig neutralisiert ist, und
das wässrige Polymer mit einer Carboxylgruppe ein saures Polymer ist.

3. Anode für eine Sekundärzelle mit nichtwässrigem Elektrolyten gemäß Anspruch 1 oder 2, **dadurch gekennzeichnet, dass** das wässrige Polymer mit einer Carboxylgruppe eine Polyacrylsäure ist.

4. Anode für eine Sekundärzelle mit nichtwässrigem Elektrolyten gemäß einem der Ansprüche 1 bis 3, **dadurch gekennzeichnet, dass** das Aktivmaterial in der Aktivmaterialschicht der Elektrode $SiO_x$ enthält, wobei x 1,5 oder kleiner ist.

**Revendications**

1. Anode pour une pile rechargeable à électrolyte non aqueux dans laquelle
une couche de matériau actif d'une électrode inclut un liant qui contient un polymère de polysaccharide aqueux ayant un groupe carboxyle, qui est un alginate de sodium, et un polymère aqueux ayant un groupe carboxyle ; et
un traitement de réticulation est appliqué au polymère de polysaccharide aqueux ayant un groupe carboxyle, qui est un alginate de sodium,
**caractérisée en ce que**
le polymère aqueux ayant un groupe carboxyle présente un poids moléculaire moyen en nombre égal ou inférieur à 300 000.

2. Anode pour une pile rechargeable à électrolyte non aqueux selon la revendication 1, **caractérisée en ce que** :

le polymère de polysaccharide aqueux ayant un groupe carboxyle est complètement neutralisé et
le polymère aqueux ayant un groupe carboxyle est un polymère acide.

3. Anode pour une pile rechargeable à électrolyte non aqueux selon la revendication 1 ou 2, **caractérisée en ce que** le polymère aqueux ayant un groupe carboxyle est un acide polyacrylique.

4. Anode pour une pile rechargeable à électrolyte non aqueux selon l'une quelconque des revendications 1 à 3, **caractérisée en ce que** le matériau actif dans la couche de matériau actif de l'électrode contient du $SiO_x$, dans laquelle x est égal ou inférieur à 1,5.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007157709 A
- WO 2014200003 A
- WO 2014015335 A1
- US 8652688 B2